# EUROPEAN PATENT APPLICATION

(11) **EP 4 759 653 A1**
(43) Date of publication of application: **17.06.2026**
(21) Application number: 24220225.7
(22) Date of filing: 16.12.2024
(51) Int. Cl.: B60T 17/00, F16K 47/02, F16K 47/08, F16L 55/02, F16L 55/027, F16L 55/033

(54) **EXHAUST DEVICE AND SILENCER SYSTEM**

(71) Applicant: ZF CV Systems Europe BV, 1170 Brüssel (BE)
(72) Inventor: BIALON, Rafal, 55-200 Godzikowice (PL)
(74) Representative: Copi, Joachim

(57) **Abstract**

The invention relates to an exhaust device (1) of a pressure supply for a vehicle (V), in particular a solenoid modulator ABS-valve (2), comprising a body (10) having an exhaust line (120) terminating in an exhaust port (130) for venting the exhaust air flow (FE), and a silencer system (20) arranged in the exhaust line (130) for damping the exhaust air flow (FE). The silencer system (20) includes a silencer device (210) defining an exhaust chamber (211) extending upstream with respect to the exhaust direction (E), and a sealing washer (220) arranged adjacent to the silencer device (210). The invention suggests that the silencer device (210) has a slice-kind base portion (212) and a rim portion (213) projecting therefrom in exhaust chamber (211), wherein the rim portion (213) is adapted to divide the flow chamber (211) into at least a first chamber region (215.1) having a first plurality of flow ports (214.1) and the second chamber region (215.2) having a second plurality of flow ports (214.2), each defining a flow passage (216.1, 216.2) from a distal entrance portion (217) of the rim portion (213) to the respective one of the first or second plurality of flow ports (214.1, 214.2).

## Description

The present invention relates to an exhaust device for a pressure supply system in vehicles, particularly a solenoid modulator ABS-valve. Such an exhaust device comprises a body having an exhaust inlet port for receiving an exhaust air flow and an exhaust line being in fluid communication with the exhaust inlet port and terminating in an exhaust port for venting the exhaust air flow in an exhaust direction. The exhaust device further has a silencer system arranged in the exhaust line for damping the exhaust air flow, including a silencer device defining an exhaust chamber extending upstream with respect to the exhaust direction and a sealing washer arranged adjacent to the silencer device. The invention further relates to a silencer system for an exhaust device of the aforementioned type and to a silencer of such a silencer system.

In the field of automotive engineering, particularly in systems involving pressure supply and exhaust mechanisms for vehicles, it is common to encounter challenges related to noise reduction and efficient air flow management. Known systems typically involve exhaust devices as for example solenoid modulator ABS-valves or similar components, which are responsible for venting exhaust air flow while attempting to minimize the noise generated during this process.

Existing exhaust devices often incorporate basic silencer systems that rely on simple configurations, such as straight-through designs or basic chamber arrangements, which may not adequately address the complexities of air flow dynamics and noise suppression. These conventional approaches can lead to suboptimal performance, where either the noise reduction is insufficient or the air flow is overly restricted, impacting the overall efficiency of the vehicle's pressure supply system.

Another silencer system employing a sealing washer and a silencer device is known from WO 2024/110030 A1. The silencer device is defined by an exhaust cap arranged and adapted such that a space between a sealing washer and the exhaust cap forms an intermediate exhaust chamber before the pressurized air exits via exhaust gaps forming an exhaust port. This silencer system allows to mitigate the sound produced by the rapid expulsion of air, but there is still room for improvement in achieving an optimal balance between effective noise reduction and maintaining the necessary air flow efficiency. This is particular relevant in the field of electric driving where no combustion engine drown out the sound resulting from the venting process.

Despite the substantial advances in the field of exhaust devices for vehicle pressure supply systems, there remains a need for further improvement in terms of noise reduction and air flow management. It is therefore a technical problem underlying the present invention to provide an exhaust device that at least partially overcomes the disadvantages of known systems.

This is where the invention comes in, wherein it is an objective of the present invention to provide an exhaust devices, a silencer system and a silencer device that overcome one or more of the disadvantages of known systems.

The invention solves the initially mentioned object by an exhaust device according to claim 1. In particular, the invention suggests with regard to an exhaust device of the type mentioned above, that the silencer device has a slice-kind base portion with a plurality of flow ports and a rim portion projecting relative to the base portion into the exhaust chamber, wherein the rim portion is adapted to divide the flow chamber into at least a first chamber region and a second chamber region, wherein the first chamber region has a first plurality of the flow ports and defines a first flow passage from a distal entrance portion of the rim portion to the first plurality of flow ports and the second chamber region has a second plurality of the flow ports and defines a second flow passage from the distal entrance portion of the rim portion to the second plurality of flow ports. In particular, the first flow passage and the second flow passage are each configured to direct the exhaust air flow at least partly orthogonal to the exhaust direction. The advantage of the invention is an improved noise reduction due to the silencer de-vice with the rim portion that allows efficient division of the exhaust chamber into at least two chamber regions. Since the at least two chamber regions each have a corresponding plurality of flow ports, the exhaust flow is divided into separate flow passages, in which the exhaust flow is guided not only in exhaust direction but also deflected therefrom thereby reducing the venting speed through the plurality of first and second flow ports. In other words, the rim portion divides the exhaust chamber as to provide two distinct regions having a respective first or second flow passage in which the exhaust air flow is deflected from its linear exhaust direction.

This design ensures that the exhaust airflow is effectively dampened, reducing noise and improving the overall performance of the vehicle's pressure supply system.

In other words, the invention pertains to an exhaust device designed for a vehicle's pressure supply system, particularly to a solenoid modulator ABS-valve. The device includes a body with an exhaust inlet port to receive exhaust air flow and an exhaust line that is fluidly connected to the exhaust inlet port, terminating in an exhaust port to vent the exhaust air flow in a specified exhaust direction. A silencer system is integrated into the exhaust line to dampen the exhaust air flow. This system includes a silencer device that defines an exhaust chamber extending upstream in relation to the exhaust direction, a sealing washer positioned next to the silencer device, and a locking member configured to secure at least the sealing washer within the exhaust line. The silencer device features a slice-kind base portion with multiple flow ports and a rim portion that projects relative to the base portion into the exhaust chamber. This rim portion is designed to divide the flow chamber into at least two regions: a first chamber region and a second chamber region. The first chamber region contains a first set of flow ports and defines a first flow passage from a distal entrance portion of the rim to the first set of flow ports. Similarly, the second chamber region contains a second set of flow ports and defines a second flow passage from the distal entrance portion of the rim to the second set of flow ports. Preferably, the silencer system further has a locking member configured for securing at least the sealing washer in the exhaust line.

The terms used in the description include "exhaust device," which refers to the overall apparatus for managing exhaust air flow. "Pressure supply" denotes the system that provides pressurized air, and "solenoid modulator ABS-valve" specifies a type of exhaust device used in anti-lock braking systems. "Body" refers to the main structure of the device, while "exhaust inlet port" and "exhaust port" are openings for receiving and venting air, respectively. Such an exhaust inlet port may be provided by a supply port of an ABS-modulator solenoid valve. However, also exhaust devices which have only an exhaust inlet port and an exhaust port are possible. "Silencer system" and "silencer device" pertain to components designed to reduce noise from the exhaust air flow. "Sealing washer" is a sealing component, and "locking member" is a part that secures the washer. "Flow ports" are openings that allow air to pass through, and "rim portion" is a projecting part that helps divide the exhaust chamber.

Further advantageous developments of the invention are found in the dependent claims and indicate in detail advantageous possibilities to realize the concept described above within the scope of the object as well as with regard to further advantages.

Preferably, the silencer device extends coaxial to the sealing washer along a longitudinal axis with the plurality of flow ports extending in exhaust direction and parallel to the longitudinal axis. This coaxial arrangement implies that the silencer device and the sealing washer share a common central axis, which can facilitate streamlined airflow and potentially enhance the efficiency of the exhaust process. The coaxial alignment ensures that the silencer device and the sealing washer are positioned in a manner that promotes direct and efficient interaction with the exhaust air flow. The alignment of the flow ports with the exhaust direction and the longitudinal axis suggests a design that minimizes turbulence and resistance, allowing for a more efficient flow of exhaust air through the de-vice.

Further preferred, the first chamber region and the second chamber region are formed symmetrically with respect to the axial direction. This symmetry contributes to balanced airflow distribution within the exhaust chamber, in particular within the first chamber region and the second chamber region, reducing noise and vibration by ensuring that the exhaust air is evenly distributed across the flow ports. The symmetrical design might also enhance the structural integrity of the silencer device by evenly distributing mechanical stresses.

It is further preferred, that the first plurality of the flow ports and the second plurality of the flow ports have a total surface area that is at least 50 %, preferably at least 60%, of the cross-sectional area of the exhaust line at the position where the base portion of the silencer device is received. The flow ports are integral to the silencer device's function, as they facilitate the passage of exhaust air through the silencer system. By stipulating that the total surface area of these flow ports is a significant percentage of the cross-sectional area of the exhaust line, it is ensured that there is sufficient capacity for the exhaust air to pass through the silencer device without causing excessive back pressure. This is crucial for maintaining the efficiency of the exhaust system and ensuring that the silencer device effectively dampens the exhaust noise. In other words, by ensuring that the flow ports occupy a substantial portion of the exhaust line's cross-sectional area, the design minimizes the risk of airflow restriction, which could otherwise lead to performance issues. Additionally, this feature contributes to the overall durability and reliability of the exhaust device by reducing the likelihood of pressure-related stress on the components.

In a preferred embodiment, the base portion and the rim portion are integrally formed. This integral formation can enhance the structural integrity and durability of the silencer device, potentially reducing the risk of component failure due to separation or misalignment. Additionally, the integral formation may simplify the manufacturing process, as it eliminates the need for additional assembly steps to connect the base portion and the rim portion. This could result in cost savings and improved consistency in the production of the exhaust device. The new feature also ensures a seamless transition between the base portion and the rim portion, which may improve the flow dynamics within the exhaust chamber. By having a continuous structure, the flow passages defined by the first and second chamber regions can be more precisely controlled, potentially leading to more effective damping of the exhaust air flow. This could result in a quieter operation of the exhaust device, which is particularly beneficial in applications such as solenoid modulator ABS-valves where noise reduction is critical. Furthermore, the integral formation of the base portion and the rim portion can contribute to a more compact design of the silencer device, as there is no need for additional space to accommodate the connection between separate components.

In a preferred embodiment, the body comprises a pin extending into the flow chamber and being in engagement with the silencer device. Further, the silencer device preferably has an inner skirt formed by the rim portion, which circumferentially encloses the pin. Additionally, the silencer device may include a protrusion extending radially inwards from the base portion, which rests against a stop shoulder provided by the pin. The pin extending into the flow chamber and engaging with the silencer device ensures a secure and stable connection, which is crucial for maintaining the alignment and positioning of the silencer device within the exhaust line. The inner skirt formed by the rim portion circumferentially enclosing the pin provides an additional layer of stability and ensures that the silencer device remains properly seated and aligned during operation. The protrusion extending radially inwards from the base portion and resting against a stop shoulder provided by the pin further secures the silencer device in place.

In a further preferred embodiment, the inner skirt has a number of ribs protruding radially inwards and resting against the pin. The ribs on the inner skirt are designed to extend inwardly and make contact with the pin, thereby providing a structural interface between these two components. This interaction ensures that the inner skirt is properly aligned and stabilized within the exhaust device. The ribs provide a means of distributing forces and maintaining the structural integrity of the inner skirt, which is crucial for the effective functioning of the silencer system within the exhaust line. By incorporating these ribs, the design addresses potential issues related to vibration and movement within the exhaust device, thereby enhancing its reliability and operational lifespan.

In a preferred embodiment, the rim portion is configured to radially divide the exhaust chamber into the first chamber region and the second chamber region. In the context of the independent claim, the silencer device includes a rim portion that projects into the exhaust chamber and is adapted to divide the flow chamber into at least a first and a second chamber region. The radial division implies that the rim portion extends outward from a central axis, effectively segmenting the chamber into distinct radial sections defining the at least one first and second chamber region. Alternatively, the rim portion is configured to tangentially divide the exhaust chamber into the first chamber region and at least one second chamber region. A tangential division suggests that the rim portion is oriented in a manner that segments the chamber along a tangent, creating separate regions that are aligned with the tangential direction relative to the chamber's geometry. By radially dividing the exhaust chamber, the exhaust device can manage the distribution of exhaust air flow across the chamber's radial sections, optimizing the damping effect and noise reduction capabilities of the silencer system. On the other hand, a tangential division allows for a different flow pattern, which is also advantageous in directing the exhaust air flow in a manner that enhances the silencing performance by deflecting the exhaust air flow from the exhaust direction in a controlled manner.

In a preferred embodiment, the rim portion has an outer skirt extending coaxially to the longitudinal axis in a circumferential direction, the outer skirt being configured to divide the exhaust chamber such that the second chamber region defines an outer annular second chamber region surrounding the first chamber region. This configuration of the outer skirt is such that it divides the exhaust chamber in a manner that results in the formation of an outer annular second chamber region. This second chamber region surrounds the first chamber region, which is a distinct spatial arrangement. The introduction of the outer skirt and its coaxial extension provides a mechanism for the exhaust chamber to be divided into concentric regions, with the second chamber region enveloping the first chamber region. This structural arrangement can have significant implications for the flow dynamics and acoustic properties of the exhaust device by providing a first flow passage and a second flow passage each defined by the respective concentric regions. By defining an outer annular second chamber region, the claim suggests a potential enhancement in the distribution and management of the exhaust air flow. The concentric division of the chamber regions facilitates a more controlled and more efficient damping of the exhaust air flow. Furthermore, the coaxial and circumferential nature of the outer skirt's extension suggests a design that is likely to be symmetrical and evenly distributed around the longitudinal axis, which contributes to a balanced and uniform flow distribution.

In a preferred embodiment, the outer skirt is coaxially arranged and radially offset from the inner skirt. This configuration implies that the outer skirt and inner skirt share a common central axis, ensuring alignment along the same longitudinal line. However, the radial offset indicates that there is a deliberate spacing between the two skirts in the radial direction, meaning that the outer skirt is positioned at a certain distance away from the inner skirt, rather than being in direct contact or overlapping. This arrangement of the skirts can influence the flow dynamics within the exhaust chamber. By having the skirts coaxially aligned, the exhaust air flow can be more uniformly distributed around the central axis, potentially reducing turbulence and enhancing the damping effect of the silencer system. The radial offset further ensures that there is a defined gap between the skirts, which creates the first chamber region.

Preferably, the silencer device is at least partly formed of a polymer material. The use of a polymer material in the construction of the silencer device offers superior resistance to various chemicals and environmental factors compared to traditional materials like metals. Additionally, the incorporation of a polymer material may contribute to a reduction in the overall weight of the exhaust device, which can be advantageous for vehicle performance and fuel efficiency. Furthermore, the use of a polymer material might provide additional design flexibility, allowing for more complex shapes and configurations that could enhance the silencing performance or facilitate easier integration into the exhaust line.

In a preferred embodiment, the base portion sealingly rests against the sealing washer. This interaction ensures a secure and airtight connection between the silencer device and the sealing washer, which is crucial for maintaining the integrity of the exhaust device's silencing function. The sealing interaction prevents any potential leakage of exhaust air flow. Additionally, the secure resting of the base portion against the sealing washer contributes to the stability and durability of the exhaust device, as it minimizes the risk of displacement or misalignment of the silencer components during operation.

Preferably, the base portion has a front face facing the sealing washer with an axially protruding sealing line which sealingly rests against the sealing washer. This interaction between the sealing line and the sealing washer ensures a tight seal, which is essential for the proper functioning of the exhaust device. The sealing line thus enhances the sealing capability of the exhaust device by providing a more secure and effective seal between the base portion and the sealing washer.

It is further preferred that the silencer device is arranged upstream of the sealing washer in exhaust direction. The silencer device, being positioned upstream, means that it encounters the exhaust air flow before the sealing washer does. This positioning allows the silencer device to perform its primary function of damping the exhaust air flow before it reaches the sealing washer. The sealing washer, in turn, is positioned to further manage the flow characteristics after the initial damping has occurred. This sequence ensures that the exhaust air flow is first subjected to the noise reduction and flow regulation provided by the silencer device, which includes the slice-kind base portion with a plurality of flow ports and a rim portion projecting into the exhaust chamber. The rim portion divides the flow chamber into at least a first chamber region and a second chamber region, each with its respective plurality of flow ports and flow passages. By arranging the silencer device upstream, the exhaust air flow is effectively managed in stages, with the first stage involving the division and regulation of flow through the silencer device's chamber regions and flow ports, and the second stage involving the sealing washer which may provide additional damping or sealing effects. This sequential arrangement can enhance the overall noise reduction and flow management capabilities of the exhaust device, leading to improved performance in terms of reducing exhaust noise and controlling the exhaust air flow more precisely. The locking member, which is preferably provided to secure at least the sealing washer in the exhaust line, ensures that the components remain in their designated positions, maintaining the integrity of the exhaust device's structure and functionality.

The invention solves the initially mentioned object in a second aspect by a silencer device according to claim 14. In particular, the invention suggests according to the second aspect, that silencer device is configured to be arranged in an exhaust line to dampen an exhaust air flow that is exhausted in an exhaust direction. When arranged in the exhaust line, the silencer device defines an exhaust chamber extending upstream with respect to the exhaust direction. The silencer device features a slice-kind base portion with a plurality of flow ports and a rim portion projecting relative to the base portion into the exhaust chamber. The rim portion is adapted to divide the flow chamber into at least a first chamber region and a second chamber region. The first chamber region includes a first plurality of flow ports and defines a first flow passage from a distal entrance portion of the rim portion to the first plurality of flow ports. The second chamber region includes a second plurality of flow ports and defines a second flow passage from the distal entrance portion of the rim portion to the second plurality of flow ports. By providing a silencer device with a rim portion for dividing an exhaust chamber into at least to distinct chamber regions with a corresponding first plurality of flow ports and a second plurality of flow ports, the silencer device has the same benefits as described with regard to the first aspect of the invention. Thus, benefits and preferred embodiments of the first aspect are at the same time benefits and preferred embodiments of the second aspect of the invention.

The invention solves the initially mentioned object in a third aspect by a silencer system according to claim 15. In particular, the invention suggests according to the third aspect, that silencer device is specifically designed for an exhaust device of a vehicle, which is configured to be arranged in an exhaust line for the purpose of damping an exhaust air flow that is exhausted in a specified exhaust direction. The silencer system comprises a silencer device, a sealing washer, and preferably a locking member. The silencer device is designed in accordance with the second aspect of the invention. By having such a silencer device, the silencer system has the same benefits as described with regard to the first and second aspect of the invention. Thus, benefits and preferred embodiments of the first and second aspect are at the same time benefits and preferred embodiments of the third aspect of the invention.

The invention solves the initially mentioned object in a fourth aspect by a vehicle, in particular commercial vehicle, having a pressure supply and an exhaust device according to the first aspect of the invention, in particular a solenoid modulator ABS-valve. By providing an exhaust device according to the first aspect of the invention, the vehicle has the same benefits as described with regard to the first aspect of the invention. Thus, benefits and preferred embodiments of the first aspect are at the same time benefits and preferred embodiments of the fourth aspect of the invention.

These and other aspects of the invention will be apparent from and elucidated with reference to the embodiments described hereinafter.

The embodiments of the invention are described in the following on the basis of the drawing in comparison with the state of the art, which is also partly illustrated. The latter is not necessarily intended to represent the embodiments to scale. The drawing is, where useful for explanation, shown in schematized and/or slightly distorted form. With regard to additions to the teaching immediately recognizable from the drawing, reference is made to the relevant prior art. It should be kept in mind that numerous modifications and changes can be made to the form and detail of an embodiment without deviating from the general concept of the invention. The features of the invention disclosed in the description, in the drawing and in the claims may be essential for a further development of the invention, either individually or in any combination. In addition, all combinations of at least two of the features disclosed in the description, drawing and/or claims fall within the scope of the invention.

The general concept of the invention is not limited to the exact form or detail of the preferred embodiments shown and described below or to a subject matter, which would be limited in comparison to the subject matter as claimed in the claims.

For specified design ranges, values within specified limits of the ranges are also disclosed as limit values and thus are arbitrarily applicable and claimable.

The following drawing shows in:
- FIG. 1:: an embodiment of a vehicle;
- FIG. 2:: a cross-sectional view of an embodiment of an exhaust device for a vehicle, illustrating the arrangement of the body, exhaust inlet port, exhaust line, silencer system, sealing washer, locking member, and other components;
- FIG. 3:: a detailed view of the exhaust device according to FIG. 2;
- FIG. 4a:: an embodiment of a silencer device with a slice-kind base portion and a plurality of flow ports in a front view;
- FIG. 4b:: the silencer device according to FIG. 4a in a back view;
- FIG. 4c:: the silencer device according to FIG. 4a in a perspective view from the front face side; and
- FIG. 4d:: the silencer device according to FIG. 4a in a perspective showing a distal end portion

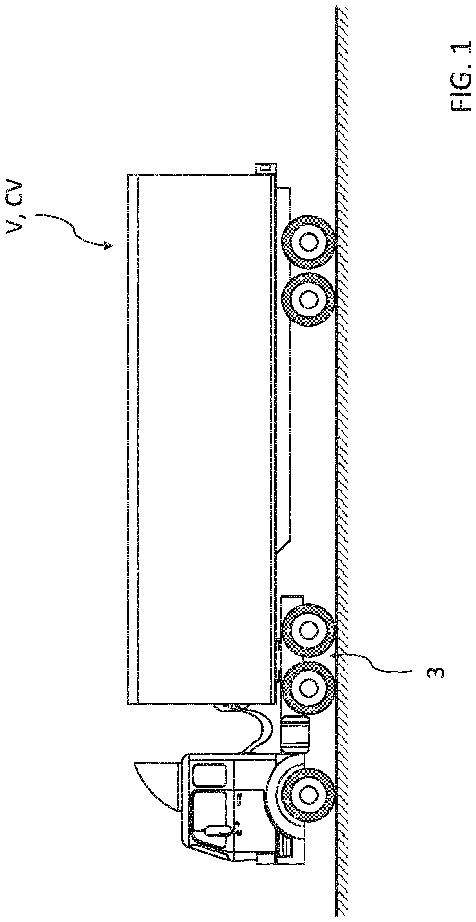

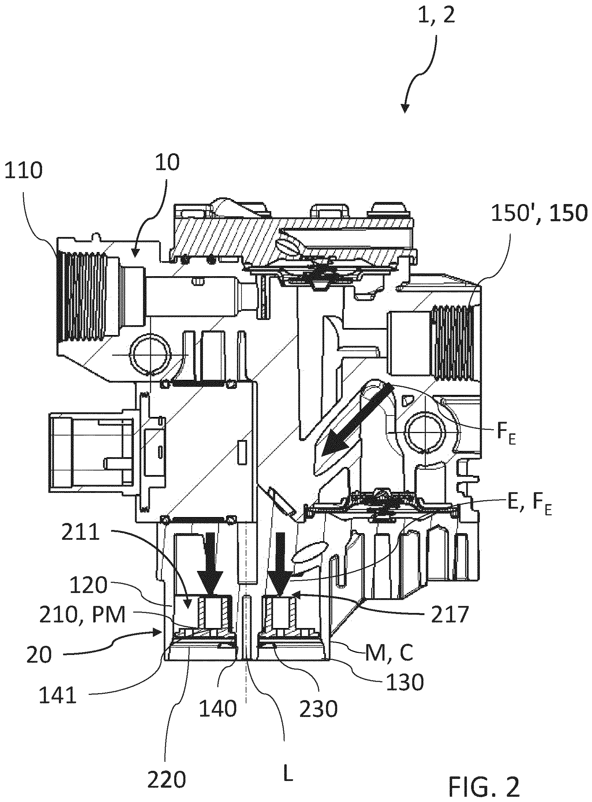

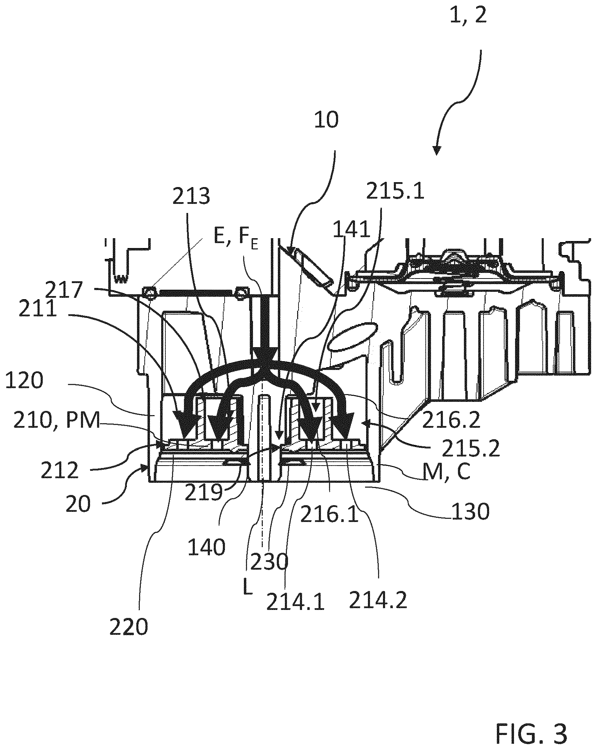

FIG. 1 illustrates a vehicle V, in particular a commercial vehicle CV having a pressure supply 3 with an exhaust device (not shown), as described with regard to FIG. 2 and FIG. 3 below.

FIG. 2 illustrates an exhaust device 1 of a pressure supply for a vehicle (see FIG. 1). The exhaust device 1 may be configured as a solenoid modulator ABS-valve 2. The exhaust device 1 comprises a body 10 with an exhaust inlet port 150 for receiving an exhaust air flow FE and an exhaust line 120 in fluid communication with the exhaust inlet port 150. The exhaust line 120 terminates in an exhaust port 130 for venting an exhaust air flow FE in an exhaust direction E.

The exhaust device 1 preferably further has an inlet port 110 configured to be in fluid communication with a supply line (not shown), wherein the exhaust inlet port 150 is configured as a supply port 150' for supplying pressurized air to a pneumatic system (not shown). For venting the pneumatic system (not shown), the supply port 150' receives the exhaust air flow FE which is directed to the exhaust line 120.

The solenoid modulator ABS-valve 2 is designed to work in three operating states: In a pressure filling state, a pneumatic system (not shown) is filled with pressurized air received via the inlet pot 110 and directed to the supply port 150. In a pressure hold state, flow from the inlet pot 110 to the supply port 150 is blocked. In a pressure exhaust state, flow from the inlet pot 110 to the supply port 150 is blocked and flow from the exhaust inlet port 150' which is designed as the supply port 150 is directed to the exhaust port 130.

The exhaust device 1 further includes a silencer system 20. The silencer system 20 is arranged within the exhaust line 120 to dampen the exhaust air flow FE. The silencer system 20 includes a silencer device 210, which defines an exhaust chamber 211 extending upstream with respect to the exhaust direction E. A sealing washer 220 of the silencer system 20 is arranged adjacent to the silencer device 210, and a locking member 230 is configured to secure at least the sealing washer 220 within the exhaust line 120. The silencer device 210 extends coaxially to the sealing washer 220 along a longitudinal axis L, with the plurality of flow ports extending in the exhaust direction E and parallel to the longitudinal axis L.

As in particular shown in the detailed view of FIG. 3, the silencer device 210 has a slice-kind base portion 212 with a plurality of flow ports and a rim portion 213 projecting relative to the base portion 212 into the exhaust chamber 211. The rim portion 213 divides the flow chamber into at least a first chamber region 215.1 and a second chamber region 215.2. The first chamber region 215.1 contains a first plurality of flow ports 214.1 and defines a first flow passage 216.1 from a distal entrance portion 217 of the rim portion 213 to the first plurality of flow ports 214.1. The second chamber region 215.2 contains a second plurality of flow ports 214.2 and defines a second flow passage 216.2 from the distal entrance portion 217 of the rim portion 213 to the second plurality of flow ports 214.2.

The first chamber region 215.1 and the second chamber region 215.2 are symmetrically formed with respect to the axial direction. The total surface area A of the first plurality 214.1 and the second plurality 214.2 of flow ports is at least 50%, preferably at least 60%, of the cross-sectional area C of the exhaust line 120 at the position where the base portion 212 is received.

The silencer device 210 is preferably at least partly constructed from a polymer material PM and is positioned coaxially along a longitudinal axis L. The flow ports extend in the exhaust direction E and are parallel to the longitudinal axis L. The base portion 212 and the rim portion 213 are integrally formed, enhancing the structural integrity of the silencer device 210.

The body 10 includes a pin 140 extending into the flow chamber and engaging with the silencer device 210. The silencer device 210 features an inner skirt 218.1 formed by the rim portion 213, circumferentially enclosing the pin 140, and a protrusion 219 extending radially inwards from the base portion 212, resting against a stop shoulder 141 provided by the pin 140. The inner skirt 218.1 has a number of ribs 218.1a protruding radially inwards and resting against the pin 140.

The rim portion 213 is configured to radially divide the exhaust chamber 211 into the first chamber region 215.1 and the second chamber region 215.2. Alternatively, the rim portion 213 can tangentially divide the exhaust chamber 211 into the first chamber region 215.1 and at least one second chamber region 215.2. The rim portion 213 includes an outer skirt 218.2 extending coaxially to the longitudinal axis L in a circumferential direction, dividing the exhaust chamber 211 such that the second chamber region 215.2 forms an outer annular region surrounding the first chamber region 215.1. The outer skirt 218.2 is coaxially arranged and radially offset from the inner skirt 218.1.

The base portion 212 sealingly rests against the sealing washer 220. The base portion 212 has a front face 212a facing the sealing washer 220 with an axially protruding sealing line 212b, which sealingly rests against the sealing washer 220. The silencer device 210 is arranged upstream of the sealing washer 220 in the exhaust direction E.

Overall, the exhaust device 1 is designed to efficiently manage and dampen the exhaust air flow FE in a vehicle's pressure supply system, providing enhanced performance and noise reduction.

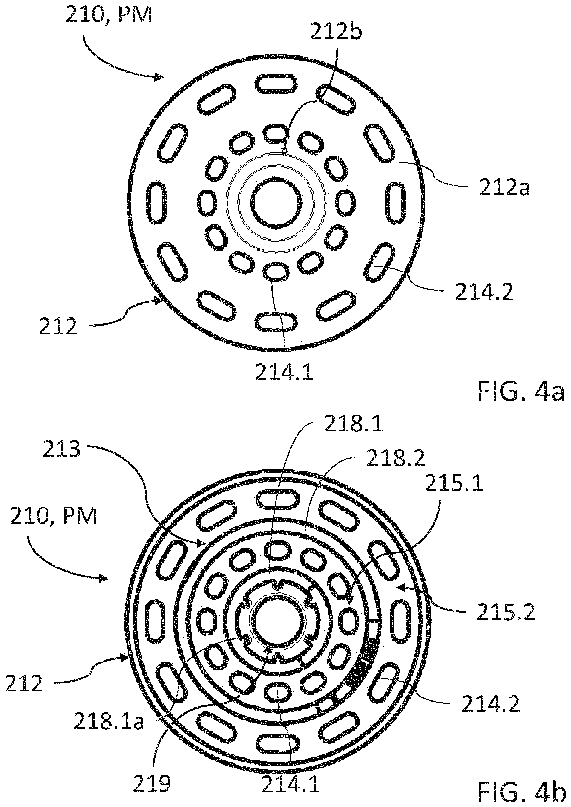

FIG. 4a shows a top view of the silencer device 210, which is preferably formed of a polymer material PM. The silencer device 210 comprises a base portion 212 with a front face 212a and an axially protruding sealing line 212b which is annular formed. The base portion 212 includes a first plurality of flow ports 214.1 provided in the first chamber region 215.1 and a second plurality of flow ports 214.2 provided in the second chamber region 215.2. The first and second plurality of flow ports 214.1, 214.2 are each evenly distributed within the respective chamber region 215.1, 215.2. The first plurality of flow ports 214.1 are located centrally, while the second plurality of flow ports 214.2 are arranged circumferentially around the central flow ports of the first plurality of flow ports 214.1. The arrangement of these flow ports facilitates the passage of exhaust air flow through the silencer device 210.

FIG. 4b illustrates a view of the silencer device 210 from its distal entrance portion 217, providing a more detailed look at its internal structure. The silencer device 210 features a rim portion 213 projecting relative to the base portion 212 into the exhaust chamber (not shown). This rim portion 213 divides the exhaust chamber into a first chamber region 215.1 and a second chamber region 215.2. The first chamber region 215.1 is defined by the inner skirt 218.1, which is coaxially arranged and radially offset from the outer skirt 218.2. The second chamber region 215.2 surrounds the first chamber region 215.1 and is defined by the outer skirt 218.2.

The inner skirt 218.1 has a number of ribs 218.1a protruding radially inwards, which rest against a pin (not shown in the figure). The base portion 212 also includes a protrusion 219 extending radially inwards from the base portion 212, which rests against a stop shoulder 141 provided by the pin 140(not shown in this figure). This configuration ensures that the silencer device 210 is securely engaged with the pin 140, maintaining its position within the exhaust line.

The flow ports 214.1 and 214.2 are symmetrically arranged with respect to the axial direction, allowing for efficient distribution of the exhaust air flow through the silencer device 210. The first flow passage 216.1 is defined from the distal entrance portion 217 of the rim portion 213 to the first plurality of flow ports 214.1, while the second flow passage 216.2 is defined from the distal entrance portion 217 of the rim portion 213 to the second plurality of flow ports 214.2. This arrangement facilitates the division of the exhaust air flow into separate paths, enhancing the damping effect of the silencer device 210.

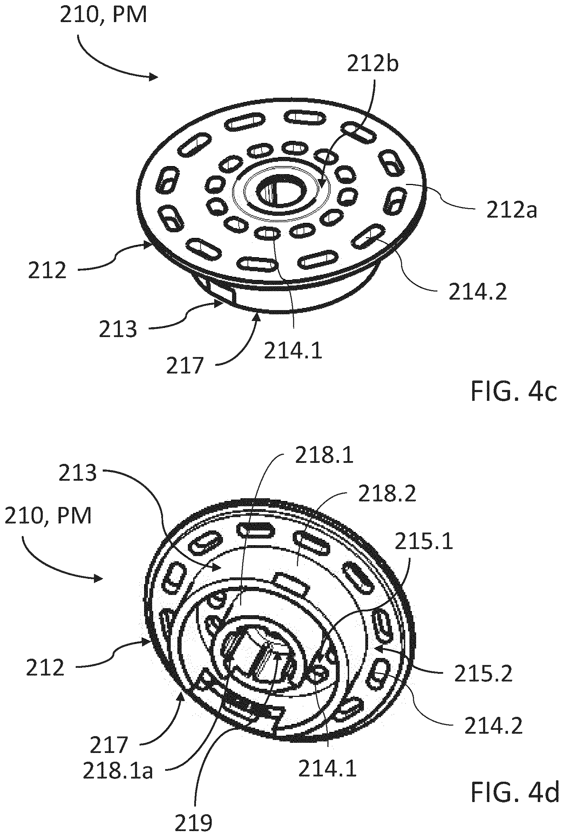

FIG. 4c shows a perspective view of a silencer device 210 with the slice-kind base portion 212 facing upwards. The base portion 212 has the front face 212a with the axially protruding sealing line 212b which is configured to sealingly rests against the sealing washer. The rim portion 213 projects relative to the base portion 212 and is integrally formed therewith.

FIG. 4d illustrates another perspective view of the silencer device 210, providing additional details. The rim portion 213 is shown to include an inner skirt 218.1 and an outer skirt 218.2. The inner skirt 218.1 is formed by the rim portion 213 and circumferentially encloses the pin 140 (not shown in this figure). The inner skirt 218.1 has the number of ribs 218.1a protruding radially inwards and resting against the pin 140. The outer skirt 218.2 extends coaxially to the longitudinal axis L in a circumferential direction and is configured to divide the exhaust chamber such that the second chamber region 215.2 defines an outer annular second chamber region surrounding the first chamber region 215.1.

In summary, the invention relates to an exhaust device of a pressure supply for a vehicle, in particular a solenoid modulator ABS-valve, comprising a body having an exhaust line terminating in an exhaust port for venting the exhaust air flow, and a silencer system arranged in the exhaust line for damping the exhaust air flow. The silencer system includes a silencer device defining an exhaust chamber extending upstream with respect to the exhaust direction, and a sealing washer arranged adjacent to the silencer device. The invention suggests that the silencer device has a slice-kind base portion and a rim portion projecting therefrom in exhaust chamber, wherein the rim portion is adapted to divide the flow chamber into at least a first chamber region having a first plurality of flow ports and the second chamber region having a second plurality of flow ports, each defining a flow passage from a distal entrance portion of the rim portion to the respective one of the first or second plurality of flow ports.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

### REFERENCE LIST (PART OF THE DESCRIPTION)

- 1: Exhaust device
- 2: ABS-valve
- 3: pressure supply
- 10: body
- 20: silencer system
- 110: inlet port
- 120: exhaust line
- 130: exhaust port
- 140: pin
- 141: stop shoulder
- 150: exhaust inlet port
- 150': supply port
- 210: silencer device
- 211: exhaust chamber
- 212: base portion
- 212a: front face
- 212b: sealing line
- 213: rim portion
- 214.1: first plurality of the flow ports
- 214.2: second plurality of the flow ports
- 215.1: first chamber region
- 215.2: second chamber region
- 216.1: first flow passage
- 216.2: second flow passage
- 217: distal entrance portion
- 218.1: inner skirt
- 218.2: outer skirt
- 218.1a: ribs
- 219: protrusion
- 220: sealing washer
- 230: locking member
- FE: exhaust air flow
- V: vehicle
- CV: commercial vehicle
- E: exhaust direction
- L: longitudinal axis
- A: total surface area
- C: cross sectional area
- PM: polymer material
- M: Mounting position

## Claims

1. Exhaust device (1) of a pressure supply (3) for a vehicle (V), in particular a solenoid modulator ABS-valve (2), comprising:
- a body (10) having an exhaust inlet port (150 for receiving an exhaust air flow (FE) and an exhaust line (120) being in fluid communication with the inlet port (150) and terminating in an exhaust port (130) for venting the exhaust air flow (FE) in an exhaust direction (E),
- a silencer system (20) arranged in the exhaust line (120) for damping the exhaust air flow (FE), including a silencer device (210) defining an exhaust chamber (211) extending upstream with respect to the exhaust direction (E), and a sealing washer (220) arranged adjacent to the silencer device (210),
**characterized in that** the silencer device (210) has a slice-kind base portion (212) with a plurality of flow ports (214.1, 214.2) and a rim portion (213) projecting relative to the base portion (212) into the exhaust chamber (211), wherein the rim portion (213) is adapted to divide the flow chamber (211) into at least a first chamber region (215.1) and a second chamber region (215.2),
wherein the first chamber region (215.1) has a first plurality of the flow ports (214.1) and defines a first flow passage (216.1) from a distal entrance portion (217) of the rim portion (213) to the first plurality of flow ports (214.1) and the second chamber region (215.2) has a second plurality of the flow ports (214.2) and defines a second flow passage (216.2) from the distal entrance portion (217) of the rim portion (213) to the second plurality of flow ports (214.2).

2. Exhaust device (1) according to claim 1,
wherein the silencer device (210) extends coaxial to the sealing washer (220) along a longitudinal axis (L) with the plurality of flow ports (2141., 214.2) extending in exhaust direction (E) and parallel to the longitudinal axis (L).

3. Exhaust device (1) according to any one of the preceding claims,
wherein the first plurality (214.1) of the flow ports and the second plurality (214.2) of the flow ports have a total surface area (A) that is at least 50%, in particular at least 60%, of a cross sectional area (C) of the exhaust line (120) at a mounting position (M) where the base portion (212) is received.

4. Exhaust device (1) according to any one of the preceding claims,
wherein the base portion (212) and the rim portion (213) are integrally formed.

5. Exhaust device (1) according to any one of the preceding claims,
wherein the body (10) comprises a pin (140) extending into the flow chamber and being in engagement with the silencer device (210), wherein the silencer device (210) preferably has at least one of the following:
- an inner skirt (218.1) formed by the rim portion (213) circumferentially enclosing the pin (140),
- a protrusion (219) extending radially inwards from the base portion (212) resting against a stop shoulder (141) provided by the pin (140).

6. Exhaust device (1) according to claim 5,
wherein the inner skirt (218.1) has a number of ribs (218.1a) protruding radially inwards and resting against the pin (140).

7. Exhaust device (1) according to any one of the preceding claims,
wherein the rim portion (213) is configured to radially divide the exhaust chamber (211) into the first chamber region (215.1) and the second chamber region (215.2), or wherein the rim portion (213) is configured to tangentially divide the exhaust chamber (211) into the first chamber region (215.1) and the at least one second chamber region (215.2).

8. Exhaust device (1) according to any one of the claims 1 to 6,
wherein the rim portion (213) has an outer skirt (218.2) extending coaxially to the longitudinal axis (L) in a circumferential direction, the outer skirt (218.2) being configured to divide the exhaust chamber (211) such that the second chamber region (215.2) defines an outer annular second chamber region (215.2) surrounding the first chamber region (215.1).

9. Exhaust device (1) according to claim 8,
wherein the outer skirt (218.2) is coaxially arranged and radially offset from the inner skirt (218.1).

10. Exhaust device (1) according to any one of the preceding claims,
wherein the silencer device (210) is at least partly formed of a polymer material (PM).

11. Exhaust device (1) according to any one of the preceding claims,
wherein the base portion (212) sealingly rests against the sealing washer (220).

12. Exhaust device (1) according to claim 11,
wherein the base portion (212) has a front face (212a) facing the sealing washer (220) with an axially protruding sealing line (212b) which sealingly rests against the sealing washer (220).

13. Exhaust device (1) according to any one of the preceding claims,
wherein the silencer device (210) is arranged upstream of the sealing washer (220) in exhaust direction (E).

14. Silencer device (210) for an exhaust device (1) of a pressure supply (3) for a vehicle (V), in particular of a solenoid modulator ABS-valve (2), in particular for an exhaust device (1) of any one of the claims 1 to 13, wherein
- the silencer device (210) is configured to be arranged in an exhaust line (120) for damping an exhaust air flow (FE) exhausted in an exhaust direction (E), and to define an exhaust chamber (211) extending upstream with respect to the exhaust direction (E) when arranged in said exhaust line (120),
**characterized in that**
- the silencer device (210) has a slice-kind base portion with a plurality of flow ports and a rim portion (213) projecting relative to the base portion (212) into the exhaust chamber (211), wherein the rim portion (213) is adapted to divide the flow chamber into at least a first chamber region (215.1) and a second chamber region (215.2),
wherein the first chamber region (215.1) has a first plurality (214.1) of the flow ports and defines a first flow passage (216.1) from a distal entrance portion (217) of the rim portion (213) to the first plurality of flow ports and the second chamber region (215.2) has a second plurality (214.2) of the flow ports and defines a second flow passage (216.2) from a distal entrance portion (217) of the rim portion (213) to the second plurality of flow ports.

15. Silencer system (20) for an exhaust device (1) of a vehicle (V), which is configured to be arranged in an exhaust line (120) of the exhaust device (1) for damping an exhaust air flow (FE) exhausted in an exhaust direction (E), the silencer system (20) comprising a silencer device (210) according to claim 14 and a sealing washer (220) arranged adjacent to the silencer device (210).
